# EUROPEAN PATENT APPLICATION

(11) **EP 4 543 030 A1**
(43) Date of publication of application: **23.04.2025**
(21) Application number: 23824258.0
(22) Date of filing: 15.06.2023
(51) Int. Cl.: H04N 23/55, H04N 23/57, H04N 23/54

(54) **CAMERA MODULE**

(30) Priority: 15.06.2022 KR 20220072777
(71) Applicant: LG INNOTEK CO. LTD, Gangseo-gu Seoul 07796 (KR)
(72) Inventor: HAN, Sang Yeon, Seoul 07796 (KR)
(74) Representative: DREISS Patentanwälte PartG mbB
(86) International application number: PCT/KR2023/008309
(87) International publication number: WO 2023/244045

(57) **Abstract**

A camera module according to an embodiment comprises a base; and a filter unit disposed on the base; wherein the base includes: a first frame including an insulating material; and a second frame inserted into the first frame and including a metal material, and the filter unit is disposed on the second frame of the base.

## Description

### [Technical Field]

An embodiment relates to a camera module and an optical device including the same.

### [Background Art]

Recently, an ultra-small camera module has been developed. In addition, the ultra-small camera module is widely used in small electronic products such as smartphones, laptops, and game consoles.

That is, most mobile electronic devices, including smartphones, are equipped with a camera device for obtaining an image from an object. In this case, mobile electronic devices are gradually becoming smaller for convenient portability.

These camera modules generally include a lens in which light is incident, an image sensor in which light is incident through the lens is captured, and a plurality of components for transmitting and receiving electrical signals for images obtained from the image sensor to electronic devices equipped with the camera module. In addition, the image sensor and the plurality of components are generally mounted on a printed circuit board and connected to external electronic devices.

In this case, in a case of the camera module applied to the electronic device as described above, an impact may be frequently applied to the camera module during use. In addition, the camera module may cause a slight shaking during a photographing operation due to a user's hand shaking, etc. Accordingly, the camera module is equipped with an optical image stabilization function.

On the other hand, the camera module as described above includes a filter mounting part called an inner base, holder, or sensor base disposed between the lens module and the image sensor.

However, the filter mounting part according to a conventional technology is a part manufactured by injection molding using a resin. Accordingly, there is a limit to reducing a thickness of the filter mounting part according to the conventional technology. In addition, there is a limit to reducing a FBL (Flange Back Length), which is a vertical distance between the lens and the image sensor, due to the limit of a minimum thickness of the filter mounting part. For example, a part manufactured by injection molding has a problem in that the extractability from a mold deteriorates as the thickness decreases. In addition, a part manufactured by injection molding has a problem in that deformation occurs during extraction from the mold as the thickness decreases. Accordingly, the filter mounting part according to the conventional technology must have a thickness of a certain level or more.

In addition, a size of the sensor is increasing as a resolution of the camera module increases, and a size of the filter is also increasing as the size of the sensor increases. In addition, in a case of the filter mounting part manufactured by injection according to the conventional technology, there is a limit to increasing the size due to flatness and warpage problems.

Accordingly, a new structure of the filter mounting part is required to maintain a certain level of flatness even if the thickness is reduced, and to maintain a certain level of rigidity even if a size in a horizontal direction increases.

(Patent Document 1) KR 10-2015-0030906 A

### [Disclosure]

### [Technical Problem]

An embodiment provides a camera module including a base of a new structure and an optical device including the same.

In addition, the embodiment provides a camera module capable of reducing a thickness of the base and an optical device including the same.

In addition, the embodiment provides a camera module capable of securing rigidity of a base and an optical device including the same.

In addition, the embodiment provides a camera module capable of improving the flatness of the base and the flatness of the filter, and an optical device including the same.

In addition, an embodiment provides a camera module capable of reducing a FBL, which is a distance between a lens and a sensor, and an optical device including the same.

Technical problems to be solved by the proposed embodiments are not limited to the above-mentioned technical problems, and other technical problems not mentioned may be clearly understood by those skilled in the art to which the embodiments proposed from the following descriptions belong.

### [Technical Solution]

A camera module according to an embodiment comprises a base; and a filter unit disposed on the base; wherein the base includes: a first frame including an insulating material; and a second frame inserted into the first frame and including a metal material, and the filter unit is disposed on the second frame of the base.

In addition, the second frame is coupled to the first frame by an insert injection method.

In addition, the first frame includes a first opening, and the second frame includes a second opening overlapping the first opening along an optical axis, and is inserted into an inner surface of the first opening of the first frame.

In addition, an area of the second opening is smaller than an area of the first opening and an area of the filter unit.

In addition, the first frame includes an receiving portion into which the second frame is inserted, wherein the receiving portion includes: a recess portion formed in an outer direction from an inner surface of the first frame; and a hole portion penetrating the inner surface and an outer surface of the first frame.

In addition, the first frame includes a partition wall part dividing the receiving portion into a plurality of regions, and the partition wall part penetrating the second frame inserted into the receiving portion.

In addition, the camera module further comprises a reinforcement plate; a circuit board disposed on the reinforcement plate and including a cavity; a sensor disposed on an upper surface of the reinforcement plate vertically overlapping the cavity of the circuit board and disposed in the cavity of the circuit board; and a connection member connecting between a terminal of the sensor and a pad of the circuit board, and an uppermost end of the connection member is positioned higher than an upper surface of the circuit board.

In addition, the first frame includes a first portion positioned above the second frame based on a position where the second frame is inserted, and a second portion positioned below the second frame based on the position, and the second frame is spaced apart from the uppermost end of the connection member in an optical axis direction by the second portion of the first frame.

In addition, a thickness of the second portion of the first frame satisfies a range of 150um to 250um.

In addition, the base includes a through hole penetrating the first frame and the second frame.

In addition, a thickness of the second frame satisfies a range of 95 µm to 160 µm.

In addition, a total thickness of the base including the first frame and the second frame satisfies a range of 350 µm to 550 µm.

In addition, the second frame includes a non-magnetic metal material.

In addition, the camera module further comprises an adhesive part disposed between the circuit board and the lower surface of the first frame of the base.

### [Effects of the Invention]

The camera module of the embodiment includes a base on which the filter unit is mounted. At this time, the base includes a plurality of frames made of different materials. For example, the base includes a first frame made of a first material and a second frame made of a second material. At this time, the first material includes an insulating material. In addition, the second material includes a metal material different from the first material. The second frame functions as a mounting portion on which the filter unit is mounted on the base. Accordingly, the embodiment can stably mount the filter unit on the base by making the mounting portion on which the filter unit is mounted made of a metal material. In addition, the embodiment can improve a flatness of the filter unit mounted on the base.

Meanwhile, a size of the sensor is increasing due to a demand for high resolution, and a size of the filter unit is also increasing accordingly. At this time, there is a limit to a size of the filter unit that can be mounted on the mounting part that is injected with an insulating material of a comparative example. Unlike this, the embodiment has a second frame corresponding to the mounting portion formed of a metal material. Accordingly, the embodiment can provide a base capable of responding to an increase in a size of the filter unit. Furthermore, the embodiment can increase a size of the filter unit that can be mounted while maintaining a flatness of the filter unit compared to the comparative example.

In addition, the embodiment can reduce a thickness of the second frame compared to the comparative example. Specifically, since the comparative example must consider the issue of non-molding in an injection process, the mounting portion must have a certain thickness or more. Unlike this, the embodiment does not have to consider the issue of non-molding of the second frame corresponding to the mounting portion. Accordingly, the embodiment can reduce a thickness of the second frame corresponding to the mounting portion compared to the comparative example. That is, the embodiment can reduce a thickness of the second frame under a condition of maintaining the flatness of the filter unit. Accordingly, the embodiment can reduce a FBL (Flange Back Length) to correspond to a decrease in the thickness of the second frame. Accordingly, the embodiment can reduce an overall thickness or volume of the camera module.

In addition, the embodiment allows the injection of the first frame in a state in which the second frame is inserted. Accordingly, the embodiment can reduce a thickness of the first frame and an overall thickness of the base corresponding thereto. For example, the comparative example require consideration of injectability and extractability issues. Accordingly, the comparative example has a limit to a reduction of an overall thickness of the base. Alternatively, the embodiment performs the injection in a state in which the second frame is inserted. Accordingly, the embodiment can reduce a thickness of the first frame and the overall thickness of the base corresponding to the thickness of the first frame compared to the comparative example. Accordingly, the embodiment can reduce a FBL (Flange Back Length). In addition, the embodiment can reduce the overall thickness or volume of the camera module.

Meanwhile, the second frame in the embodiment includes a blackened coating layer. The coating layer prevents light passing through the lens and filter from being reflected through the second frame. Accordingly, the embodiment can improve an image quality of the camera module.

In addition, the second frame in the embodiment is formed of a non-magnetic material. Accordingly, the embodiment can solve a problem that operating characteristics of a sensor driving device are deteriorated by the second frame. For example, when the second frame is composed of a magnetic material, magnetic interference may occur in an interaction between the coil and the magnet of the sensor driving device. In addition, the operating characteristics of the sensor driving device may be deteriorated by the magnetic interference. Unlike this, the second frame in the embodiment includes a non-magnetic material. Accordingly, the embodiment can achieve an effect of maintaining the flatness of the filter unit and reducing the FBL without affecting the operating characteristics of the sensor driving device.

### [Description of Drawings]

FIG. 1 is a perspective view of a camera module according to an embodiment.
FIG. 2 is an exploded perspective view of a camera module according to an embodiment.
FIG. 3 is a cross-sectional view of the camera module of FIG. 1 taken along a line A-A'.
FIG. 4 is an enlarged view of a partial region of FIG. 3.
FIG. 5 is an exploded perspective view of a filter module according to an embodiment.
FIG. 6 is a plan view of a filter module according to an embodiment.
FIG. 7 is an exploded perspective view of a base according to an embodiment.
FIG. 8 is an enlarged view of a partial region of a base according to an embodiment.
FIG. 9 is a first enlarged view of a partial region of a first frame of a base according to an embodiment.
FIG. 10 is a second enlarged view of a partial region of a first frame of a base according to an embodiment.
FIG. 11 is a cross-sectional view of a filter module according to an embodiment taken along a line A-A'.
FIG. 12 is a combination view of a filter module and a circuit board according to an embodiment.
FIG. 13 is a perspective view of a portable terminal according to an embodiment.
FIG. 14 is a configuration diagram of a portable terminal illustrated in FIG. 13.

### [Best Mode]

Hereinafter, embodiments of the present disclosure will be described in detail with reference to the accompanying drawings.

However, the spirit and scope of the present disclosure is not limited to a part of the embodiments described, and may be implemented in various other forms, and within the spirit and scope of the present disclosure, one or more of the elements of the embodiments may be selectively combined and redisposed.

In addition, unless expressly otherwise defined and described, the terms used in the embodiments of the present disclosure (including technical and scientific terms) may be construed the same meaning as commonly understood by one of ordinary skill in the art to which this invention belongs, and the terms such as those defined in commonly used dictionaries may be interpreted as having a meaning that is consistent with their meaning in the context of the relevant art.

In addition, the terms used in the embodiments of the present disclosure are for describing the embodiments and are not intended to limit the present disclosure. In this specification, the singular forms may also include the plural forms unless specifically stated in the phrase, and may include at least one of all combinations that may be combined in A, B, and C when described in "at least one (or more) of A (and), B, and C".

Further, in describing the elements of the embodiments of the present disclosure, the terms such as first, second, A, B, (a), and (b) may be used. These terms are only used to distinguish the elements from other elements, and the terms are not limited to the essence, order, or order of the elements. In addition, when an element is described as being "connected", "coupled", or "contacted" to another element, it may include not only when the element is directly "connected" to, "coupled" to, or "contacted" to other elements, but also when the element is "connected", "coupled", or "contacted" by another element between the element and other elements.

Further, when described as being formed or disposed "on (over)" or "under (below)" of each element, the "on (over)" or "under (below)" may include not only when two elements are directly connected to each other, but also when one or more other elements are formed or disposed between two elements. Furthermore, when expressed as "on (over)" or "under (below)", it may include not only an upper direction but also a lower direction based on one element.

Hereinafter, an optical axis direction used may be defined as an optical axis direction of a lens coupled to a camera actuator and a camera module, and a vertical direction may be defined as a direction perpendicular to the optical axis.

An auto-focus function used below may be defined as a function that automatically focuses on a subject by moving the lens in the optical axis direction according to a distance of the subject so that a clear image of the subject can be obtained on an image sensor.

Meanwhile, the auto focus may correspond to AF. Also, closed-loop auto-focus (CLAF) control may be defined as real-time feedback (feedback) control of a position of a lens by sensing a distance between an image sensor and the lens to improve accuracy of focus control.

Also, before describing the embodiments of the invention, a first direction may refer to a x-axis direction illustrated in the drawing, and a second direction may be a direction different from the first direction. For example, the second direction may refer to a y-axis direction illustrated in the drawing and a direction perpendicular to the first direction. Also, a third direction may be a direction different from the first and second directions. For example, the third direction may refer to a z-axis direction illustrated in the drawing and a direction perpendicular to the first and second directions. Here, the third direction may refer to an optical axis direction.

Hereinafter, a camera module and an optical device including the same according to an embodiment will be described in detail.

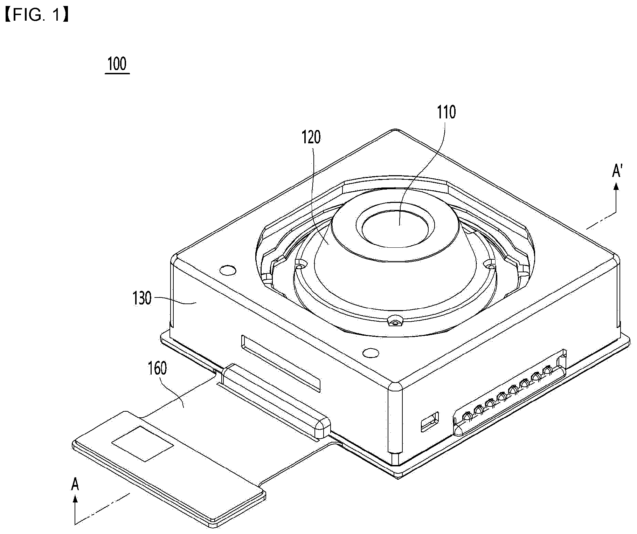

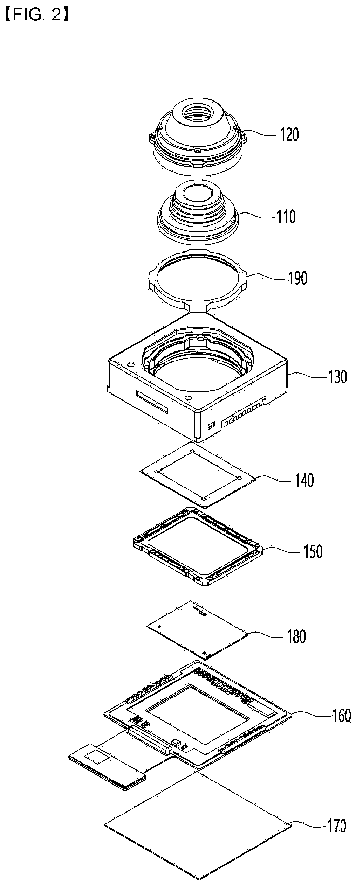

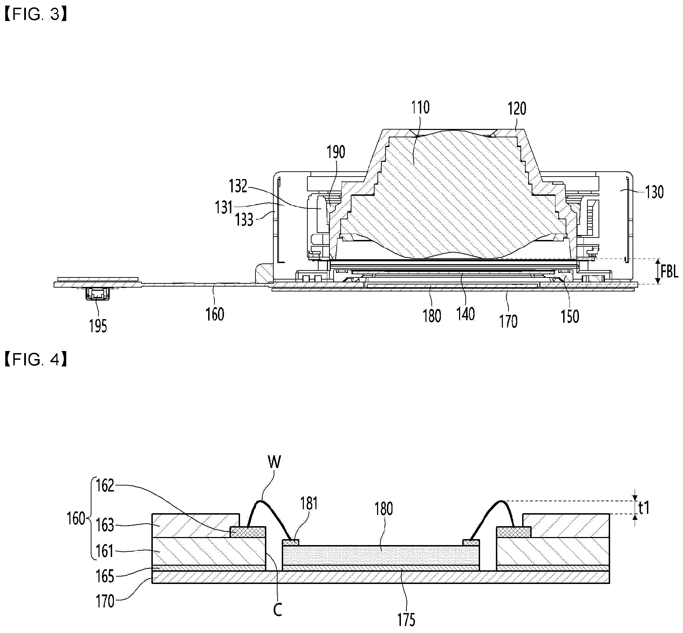

FIG. 1 is a perspective view of a camera module according to an embodiment, FIG. 2 is an exploded perspective view of a camera module according to an embodiment, FIG. 3 is a cross-sectional view of the camera module of FIG. 1 taken along a line A-A', and FIG. 4 is an enlarged view of a partial region of FIG. 3.

Referring to FIGS. 1 to 4, a camera module 100 according to an embodiment may include a lens 110, a lens barrel 120, a lens driving device 130, a filter unit 140, a base 150, a circuit board 160, a reinforcement plate 170, a sensor 180, and an adhesive part 190.

Here, the camera module 100 may be represented by being redisposed with a photographer or a photographing device. Also, the base 150 may be represented by being redisposed with a holder, a sensor base, an inner base, a filter mounting portion, or a filter seating portion. Also, the lens driving device 130 may be referred to as an actuator for driving the lens 110 or the lens barrel 120.

The lens 110 or the lens barrel 120 may be coupled to the lens driving device 130. For example, the lens 110 or the lens barrel 120 may be mounted on the lens driving device 130.

For example, the lens 110 may be mounted within the lens barrel 120. In addition, the lens barrel 120 may be mounted on the lens driving device 130.

In this case, the lens driving device 130 includes a bobbin (not shown). In addition, the lens barrel 120 may be coupled to the bobbin of the lens driving device 130.

An adhesive part 190 may be disposed between an outer surface of the lens barrel 120 and an inner surface of the bobbin of the lens driving device 130. In addition, the lens barrel 120 may be coupled to the bobbin of the lens driving device 130 through the adhesive part 190. In this case, the lens barrel 120 may move together with the bobbin corresponding to a moving part of the lens driving device 130. As will be described later, the lens driving device 130 includes a fixed part having a fixed position and a moving part moving with respect to the fixed part. Also, the bobbin is included in the moving part of the lens driving device 130. In this case, the lens barrel 120 is coupled to the bobbin of the moving part of the lens driving device 130. Accordingly, when the moving part of the lens driving device 130 moves, the lens barrel 120 may move together with the moving part.

That is, the lens driving device 130 may drive the lens barrel 120 coupled with the lens 110.

The lens 110 may be an optical system in which three or more lenses are stacked. The lens 110 may be an optical system in which five or more lenses are stacked. The lens 110 may be an optical system in which eight or more lenses are stacked. In this case, although the lens 110 is shown to include eight lenses in the drawing, the embodiment is not limited thereto. For example, the lens 110 may have a stacked structure of less than 8 sheets, or alternatively, may have a stacked structure of 9 sheets or more.

The lens 110 may include a lens made of a plastic material. The lens 110 according to an embodiment of the present invention may include a first lens unit made of a plastic material and a second lens unit made of a glass material. In addition, a number of lenses in the first lens unit made of the plastic material may be greater than a number of lenses in the second lens unit made of the glass material. For example, the number of lenses in the first lens unit made of the plastic material may be two or more.

In an embodiment, the lens 110 may be stacked with plastic lenses and/or glass lens(s). Here, a coefficient of thermal expansion (CTE) of the plastic material is higher than a coefficient of thermal expansion (CTE) of the glass material by five times or more, and a change value of a refractive index (|dN/Dt|) according to a function of temperature may be higher than that of the plastic material by ten times or more. Here, dN is a change value of a refractive index of the lens, and dT is a change value of a temperature.

In addition, the camera module 100 may be any one of a camera module for an auto focus (AF) and a camera module for an optical image stabilizer (OIS). A camera module for AF refers to one that can only perform the autofocus function. A camera module for OIS refers to one that performs both the autofocus function and the OIS function.

For example, the lens driving device 130 may be a lens driving device for AF or a lens driving device for OIS. Here, the meanings "for AF" and "for OIS" may be the same as those described in the camera module for AF and the camera module for OIS.

For example, the lens driving device 130 of the camera module 100 may be a lens driving device for OIS.

The lens driving device 130 may include a housing 131 and a bobbin 132 disposed in the housing 131 and coupled to the lens barrel 120.

Also, although not specifically shown in the drawing, the lens driving device 130 may include a first coil (not shown) coupled to the bobbin 132. Also, the lens driving device 130 may include a magnet (not shown) coupled to the housing 131 and opposite to the first coil.

Also, the lens driving device 130 may include at least one upper elastic member (not shown) coupled to an upper portion of the housing 131 and an upper portion of the bobbin 132. Also, the lens driving device 130 may include at least one lower elastic member (not shown) coupled to a lower portion of the housing 131 and a lower portion of the bobbin 132.

Also, the lens driving device 130 may include a second coil (not shown) disposed under the bobbin 132 or the housing 131. Also, the lens driving device 130 may include a driving substrate (not shown) disposed under the second coil. Also, the lens driving device 130 may include a frame part (not shown) disposed under the driving substrate.

Meanwhile, the bobbin 132 may also be referred to as a holder to which the lens barrel 120 is coupled.

In addition, the lens driving device 130 may include a cover member 133 coupled to the frame part and providing a space for accommodating components of the lens driving device 130 together with the frame part.

Further, the lens driving device 130 may further include a support member (not shown) supporting the housing 131 with respect to the frame part while electrically connecting the driving substrate to the upper elastic member. Each of the first coil and the second coil may be electrically connected to a driving substrate and may receive a driving signal (driving current) from the driving substrate.

For example, an upper elastic member may include a plurality of upper springs. In addition, a support member may include support members connected to the upper springs of the upper elastic member. In addition, the first coil may be electrically connected to the driving substrate through the upper springs and the support member. The driving substrate may include a plurality of terminals. The first coil and/or the second coil may be electrically connected to some of the plurality of terminals.

The lens driving device 130 according to an embodiment may move the bobbin 132 and the lens barrel 120 to be coupled to the bobbin 132 in the optical axis direction by an electromagnetic force by an interaction between the first coil and the magnet. In addition, positions of the lens barrel 120 and the lens 110 coupled to the lens barrel 120 in the optical axis direction may be controlled by the electromagnetic force. Accordingly, AF driving may be implemented.

In addition, in the lens driving device 130, the housing 131 may be moved in a direction perpendicular to the optical axis direction by an electromagnetic force caused by an interaction between the second coil and the magnet. Accordingly, hand shake correction or OIS driving may be implemented.

In addition, the lens driving device 130 of the camera module 100 may include a position sensor unit (not shown) for AF feedback driving. The position sensor unit may include a sensing magnet (not shown) disposed on a bobbin 132 and an AF position sensor (for example, a hall sensor, not shown) disposed on a housing 131.

In addition, the lens driving device 130 may further include a sensor substrate (not shown) disposed on the housing 131 or/and the frame, on which the AF position sensor is disposed or mounted. In another embodiment, the AF position sensor may be disposed on the bobbin 132, and the sensing magnet may be disposed on the housing 131. In addition, the lens driving device 130 may further include a balancing magnet (not shown) disposed on the bobbin 132 corresponding to the sensing magnet.

The AF position sensor detects a strength of a magnetic field of the sensing magnet according to a movement of the bobbin 132. In addition, the AF position sensor can generate an output signal according to a result of the detection. The AF position sensor can be electrically connected to the driving substrate through the upper elastic member (or the lower elastic member) and/or the support member. The driving substrate can provide a driving signal to the AF position sensor. In addition, the driving substrate can receive the output signal of the AF position sensor.

In another embodiment, the lens driving device 130 may be an AF lens driving device, and the AF lens driving device may include a housing 131, a bobbin 132 disposed inside the housing 131, a coil disposed in the bobbin 132, a magnet disposed in the housing 131, at least one elastic member coupled to the bobbin 132 and the housing 131, and a frame part disposed under the bobbin (or/and the housing).

For example, the elastic member may include the upper elastic member and the lower elastic member described above.

A driving signal (e.g., a driving current) may be provided to the coil. In addition, the bobbin 132 may be moved in the optical axis direction by an electromagnetic force due to an interaction between the coil and the magnet based on the provided driving signal.

In another embodiment, the coil may be disposed in the housing, and the magnet may be disposed in the bobbin 132.

In addition, for the AF feedback driving, the AF lens driving device may further include a sensing magnet disposed on the bobbin 132, an AF position sensor (e.g., a hall sensor) disposed on the housing 131, and a sensor substrate on which the AF position sensor is disposed and disposed or mounted on the housing or/and the frame. In another embodiment, the AF position sensor may be disposed on the bobbin 132, and the sensing magnet may be disposed on the housing 131.

A camera module according to another embodiment may include a housing coupled with a lens or lens barrel 120 instead of the lens driving device 130 of FIG. 1. In addition, the housing may be coupled or attached to an upper surface of the base 150. At this time, the housing may be attached or fixed to the base 150 and may not move. For example, the housing may be attached to the base 150, and a position of the housing may be fixed.

The circuit board may be electrically connected to the coil and the AF position sensor. In addition, a driving signal can be provided to each of the coil and the AF position sensor through the circuit board, and an output signal of the AF position sensor can be transmitted to the circuit board.

The base 150 can be disposed under the lens driving device 130.

The filter unit 140 can be mounted on the base 150. To this end, the base 150 can be provided with a mounting portion on which the filter unit 140 is mounted. That is, the base 150 can include a window in which a region in which the filter unit 140 is disposed is opened. Accordingly, the mounting portion of the base 150 can also be referred to as a window.

At this time, an adhesive part (not shown) can be applied between the base 150 and the filter unit 140. For example, the adhesive part can be disposed between the mounting portion (to be described later) of the base 150 and the filter unit 140. The adhesive part can be an epoxy, a thermosetting adhesive, an ultraviolet-curable adhesive, etc.

The filter unit 140 can be mounted on the base 150. To this end, the base 150 may include a plurality of frames.

At this time, a fact that the base 150 includes a plurality of frames does not mean that the base 150 includes a plurality of different components. The plurality of frames may be components that constitute the base 150 classified by material.

As will be described later, the base 150 in the embodiment may be an injection-molded product that is injected by insert injection or double injection. Accordingly, the base 150 may include a first frame 151 and a second frame 152 inserted into the first frame 151. In addition, a material that constitutes the first frame 151 may be different from a material that constitutes the second frame 152. For example, the first frame 151 may include an insulating material. For example, the first frame 151 may be formed of resin. For example, the first frame 151 may be formed of plastic. The second frame 152 includes a different material from the first frame 151. Preferably, the second frame 152 may include a metal material. More preferably, the second frame 152 may include a non-magnetic metal material.

In addition, the second frame 152 may be formed of a metal material and may be inserted into the first frame 151. The second frame 152 may have a function of improving the rigidity of the first frame 151 and the rigidity of the base 150. In addition, the second frame 152 may have a function of improving the flatness of the first frame 151 and the flatness of the base 150.

Specifically, the second frame 152 is inserted into the first frame 151. The second frame 152 may be a mounting portion on which the filter unit 140 is mounted. For example, the second frame 152 may be a window.

In the embodiment, the base 150 includes a first frame 151 made of an insulating material and a second frame 152 made of a metal material and inserted into the first frame 151. In addition, the second frame 152 can have a function of reducing a minimum injectable thickness of the first frame 151. In addition, the second frame 152 may reduce a minimum thickness of the mounting portion (or window) required for mounting and/or supporting the filter unit 140. For example, when the mounting portion is formed of an injection molded product of an insulating material, the mounting portion must have a first thickness for mounting and/or supporting the filter unit 140. In contrast, when the mounting portion is formed of a second frame 152 of a metal material such as the embodiment, the second frame 152 may have a second thickness smaller than the first thickness for mounting and/or supporting the filter unit 140. Accordingly, the embodiment can reduce a thickness of the mounting portion. Furthermore, an overall thickness of the first frame 151 formed by injection molding can be reduced by the second frame 152. Accordingly, the embodiment can reduce the entire thickness of the base 150. Accordingly, the embodiment can maintain the flatness of the base 150 to improve the warpage characteristics of the filter unit 140. In addition, the embodiment can reduce a thickness of the base 150, thereby reducing the FBL (Flange Back Length), which is a distance between the lens 110 and the sensor 180.

The embodiment provides a base 150 formed integrally by double injection molding of a first frame 151 and a second frame 152. In addition, the second frame 152 is inserted into the first frame 151 and enables effects such as improvement of flatness, improvement of warpage characteristics, thickness reduction, and FBL reduction of the base 150.

That is, the first frame 151 includes an opening vertically overlapping the filter unit 140. In addition, the second frame 152 may be a protrusion that protrudes from an inner surface of the opening of the first frame 151 toward the opening.

In addition, the second frame 152, which is the protrusion, may function as a mounting portion on which the filter unit 140 is mounted.

At this time, the second frame 152 may also have an opening corresponding to the opening of the first frame 151. However, an area of the opening of the second frame 152 may be smaller than an area of the opening of the first frame 151. Accordingly, a portion of the opening of the first frame 151 may be covered by the second frame 152. For example, the opening of the first frame 151 includes a first region overlapping the opening of the second frame 152 along the optical axis, and a second region overlapping the opening of the second frame 152 along the optical axis.

The second frame 152 may prevent a lower end of the lens 110 or lens barrel 120 from directly contacting or colliding with the filter unit 140 while allowing the filter unit 140 to be mounted.

At this time, the first frame 151 may have a shape that protrudes in the optical axis direction from an upper surface of the second frame 152. For example, the first frame 151 may include a first portion 151a protruding in the optical axis direction along a side surface of the filter unit 140 mounted on the second frame 152. For example, the first portion 151a of the first frame 151 may be disposed around a side surface of the filter unit 140 mounted on the second frame 152 so as to surround the side surface of the filter unit 140.

In addition, an inner surface of the first portion 151a of the first frame 151 may be provided to face a side surface of the filter unit 140. At this time, an outer surface of the filter unit 140 may be spaced apart from an inner surface of the first portion 151a of the first frame 151 by a certain distance. This may be to secure a process tolerance that allows the filter unit 140 to be easily mounted on the second frame 152.

An upper surface of the first frame 151 may be positioned higher than the upper surface of the filter unit 140 in the optical axis direction. This may be to prevent the lens 110 or the lens barrel 120 from contacting the filter unit 140 when the lens driving device 130 or the lens barrel 120 moves toward the filter unit 140 by the lens driving device 130 or an external impact.

Meanwhile, a shape of the first frame 151 and a shape of the second frame 152 as viewed from above may correspond to a shape of the filter unit 140, but are not limited thereto. For example, a planar shape of at least one of the first frame 151 and the second frame 152 may be different from a planar shape of the filter unit 140.

Meanwhile, the base 150 may include an incident portion corresponding to the opening of the first frame 151 and the opening of the second frame 152. The incident portion may allow light passing through the filter unit 140 to be incident on the sensor 180. The opening and the incident portion may penetrate the base 150 in the optical axis direction. Accordingly, the opening and the incident portion may also be referred to as a through hole.

The opening may penetrate a center of the base 150. At this time, an area of the opening formed in the first frame 151 may be larger than an area of the filter unit 140. In addition, the area of the opening formed in the second frame 152 may be smaller than the area of the filter unit 140. Accordingly, the filter unit 140 may be positioned within the opening of the first frame 151 while being mounted to the second frame 152.

The filter unit 140 may be disposed on the base 150. Preferably, the filter unit 140 may be mounted on the second frame 152 of the base 150.

The filter unit 140 may block light of a specific frequency band from passing through the lens 110 accommodated in the lens barrel 120. For example, the filter unit 140 may block light of a specific frequency band from being incident on the sensor 180.

For example, the filter unit 140 may be an infrared filter, but is not limited thereto. The filter unit 140 may be disposed parallel to a direction perpendicular to the optical axis (OA) (for example, an x-y plane direction).

The circuit board 160 may be disposed below the base 150. That is, the base 150 may be attached or coupled to the circuit board 160.

To this end, an adhesive part 145 may be disposed between the base 150 and the circuit board 160. In addition, the adhesive part 145 may stably fix the base 150 on the circuit board 160.

Meanwhile, the circuit board 160 may include a cavity C that overlaps the opening of the base 150 vertically or along the optical axis. The cavity C may mean a through hole penetrating the circuit board 160. For example, the circuit board 160 may include a cavity C in which a region overlapping the filter unit 140 or an opening of the base 150 in an optical axis is opened. In addition, the cavity C may penetrate an upper surface and a lower surface opposite to the upper surface of the circuit board 160.

The camera module 100 of the embodiment includes a sensor 180. The sensor 180 may also be referred to as an image sensor.

The sensor 180 may be disposed in the cavity C of the circuit board 160. For example, the sensor 180 may overlap the cavity C of the circuit board 160 in the optical axis direction.

The camera module 100 according to an embodiment may include a reinforcement plate 170.

The reinforcement plate 170 may be attached to a lower surface of the circuit board 160.

The reinforcement plate 170 may include an overlapping region that overlaps the cavity C of the circuit board 160 in an optical axis.

In addition, the sensor 180 may be attached to an upper surface of the overlapping region of the reinforcement plate 170. For example, the sensor 180 may be attached to an upper surface of the overlapping region of the reinforcement plate 170 while being disposed in the cavity C of the circuit board 160.

That is, in recent years, a resolution required by the camera module is increasing. In addition, as the resolution increases, a size of the sensor 180 is increasing. In this case, when the sensor 180 is disposed on the circuit board 160, it may be difficult to maintain the flatness of the sensor 180 that gradually increases in size. Also, when the sensor 180 is disposed on the circuit board 160, heat dissipation characteristics of the sensor 180 may be deteriorated.

Accordingly, in an embodiment, the reinforcement plate 170 is attached to a lower surface of the circuit board 160. In addition, in an embodiment, the sensor 180 may be attached on the reinforcement plate 170 instead of the circuit board 160.

For example, the sensor 180 of the embodiment may be directly attached on the reinforcement plate 170. Here, the direct attachment may mean that the sensor 180 is directly disposed on an adhesive part (described later) disposed on the reinforcement plate 170.

Meanwhile, while the sensor 180 is disposed on the reinforcement plate 170, the sensor 180 may be exposed through the cavity C of the circuit board 160. In addition, a terminal 181 of the sensor 180 may be electrically connected to a pad 162 of the circuit board 160. For example, the sensor 180 may be electrically connected to the circuit board 160 through a connection member W (e.g., a wire).

The reinforcement plate 170 may be a plate-shaped member having a thickness and hardness of a predetermined level or higher. Accordingly, the reinforcement plate 170 may stably support the sensor 180. In addition, the reinforcement plate 170 may prevent the sensor 180 from being damaged by an external impact. For example, the reinforcement plate 170 may protect the sensor 180 from an external impact. In addition, the reinforcement plate 170 may dissipate heat generated by the sensor 180. Accordingly, the reinforcement plate 170 may perform a heat dissipation function of dissipating heat generated by the sensor 180 to an outside, while improving the flatness of the sensor 180.

To this end, the reinforcement plate 170 may include a metal material having high thermal conductivity. For example, the reinforcement plate 170 may be SUS. However, the embodiment is not limited thereto. The reinforcement plate 170 may be formed of aluminum having high thermal conductivity other than SUS. In addition, as another example, the reinforcement plate 170 may include glass, plastic, or synthetic resin.

The reinforcement plate 170 may be connected to a ground (not shown) of the circuit board 160. For example, the reinforcement plate 170 may be electrically connected to a ground pattern (not shown) of the circuit board 160. Accordingly, the reinforcement plate 170 may serve as a ground for protecting the camera module from an electrostatic discharge protection (ESD).

Light passing through the filter unit 140 may be incident on the sensor 180. The sensor 180 may be a portion in which an image included in light incident through the filter unit 140 is formed.

The circuit board 160 may convert an image formed on the sensor 180 into an electrical signal and transmit the electrical signal to an external device. To this end, the circuit board 160 may include various circuit parts, element parts, control parts, etc. In addition, the circuit board 160 may include an element part or a pattern part electrically connected to the sensor 180. The pattern part may include the pad 162. A detailed configuration of the circuit board 160 is to be described below.

Meanwhile, the sensor 180 may receive an image included in incident light and convert the received image into an electrical signal. For example, the sensor 180 may be a charge-coupled device (CCD), a complementary metal-oxide semiconductor (CMOS), etc. However, embodiments are not limited thereto, and the sensor 180 may be implemented by other devices performing a function similar to that of the CCD or CMOS.

The filter unit 140 and the sensor 180 may face each other in an optical axis OA direction.

Meanwhile, the filter unit 140 may include a filter 141 having a blocking member 142 formed on an upper surface thereof. The blocking member 142 may be redisposed with a "masking unit".

The blocking member 142 may be disposed at an edge region of an upper surface of the filter 141. The blocking member 142 may block a portion of light passing through the lens 110. For example, the blocking member 142 may block light incident to an edge region of the upper surface of the filter 141, among light passing through the lens 110. For example, the blocking member 142 can block light passing through the lens 110 from passing through the edge region of the upper surface of the filter 141. The blocking member 142 may be coupled or attached to the upper surface of the filter 141.

For example, the filter 141 may have a rectangular planar shape. In addition, the blocking member 142 may be formed symmetrically with the filter 141 along each side of the upper surface of the filter 141. The blocking member 142 may be formed to have a predetermined width at an edge region of the upper surface of the filter 141.

The blocking member 142 may be formed of an opaque material. For example, the blocking member 142 may be an adhesive material of an opaque material applied to the filter 141, but is not limited thereto. For example, the blocking member 142 may be a film of an opaque material attached to the upper surface of the filter unit 140.

The filter 141 and the sensor 180 may be disposed to face each other in an optical axis direction. In addition, the blocking member 142 may include at least a portion overlapping the pad 162 and/or the connection member W disposed on the circuit board 160 in an optical axis direction.

Meanwhile, the connection member W and the pad 162 may be formed of a conductive material. For example, the connection member W and the pad 162 may be formed of gold (Au), silver (Ag), copper (Cu), a copper alloy, or the like. Meanwhile, a conductive material constituting the connection member W and the pad 162 has a characteristic of reflecting light. Accordingly, light passing through the filter 141 may be reflected by the pad 162 and/or the connection member W of the circuit board 160. In addition, an instantaneous flare phenomenon may occur due to the reflected light. In addition, the flare phenomenon may distort an image formed by the sensor 180 or deteriorate image quality thereof.

In this case, a portion of the blocking member 142 of the filter unit 140 overlaps the pad 162 and/or the connection member W in the optical axis direction. Thereby, light directed to the pad 162 and/or the connection member W of the circuit board 160 among the light passing through the lens 110 may be blocked. In the embodiment, a flare phenomenon may be prevented by blocking the light. Accordingly, an embodiment may prevent an image formed by the sensor 180 from being distorted. Furthermore, an embodiment may improve a quality of an image obtained by the sensor 180.

Meanwhile, a motion sensor (not shown) may be mounted or disposed on the circuit board 160. The motion sensor may be electrically connected to a control device (not shown) through a pattern part provided on the circuit board 160.

The motion sensor may obtain rotational velocity information on a movement of the camera module 100. The motion sensor may be a two-axis or three-axis gyro sensor. The motion sensor may be an angular velocity sensor. The control element may be mounted or disposed on the circuit board 160.

The circuit board 160 may be electrically connected to the lens driving device 130. For example, the circuit board 160 may be electrically connected to the driving board of the lens driving device 130.

For example, the circuit board 160 may supply a driving signal to the first and second coils of the lens driving device 130. Furthermore, the circuit board 160 may supply a driving signal to an AF position sensor (or an OIS position sensor). Furthermore, the circuit board 160 may receive an output signal of an AF position sensor (or an OIS position sensor).

Meanwhile, the camera module 100 includes a connector 190.

The connector 190 may be disposed on the circuit board 160. For example, the connector 190 may be electrically connected to the circuit board 160. The connector 190 may include a port electrically connected to an external device.

Meanwhile, the camera module 100 of an embodiment may include a plurality of adhesive parts disposed between different components. The adhesive part may provide an adhesive force between different components. For example, the adhesive part may attach or fix one component to or to another component.

For example, the camera module 100 may include an adhesive part 175 disposed between a lower surface of the sensor 180 and an upper surface of the reinforcement plate 170. The sensor 180 may be attached or fixed to the reinforcement plate 170 by the adhesive part 175.

The reinforcement plate 170 may be divided into a plurality of regions.

The reinforcement plate 170 may include a first region and a second region. The first region of the reinforcement plate 170 may be a region overlapping the cavity C of the sensor 180 and/or the circuit board 160 in the optical axis direction.

The second region of the reinforcement plate 170 may be a region that does not overlap the sensor 180 and the cavity C in the optical axis direction.

In addition, the adhesive part 175 may be disposed on the first region of the reinforcement plate 170. That is, the first region of the reinforcement plate 170 may be a sensor attachment region to which the sensor 180 is attached by the adhesive part 175. The adhesive part 175 may be any one of an epoxy, a thermosetting adhesive, an ultraviolet curable adhesive, and an adhesive film, but is not limited thereto.

Meanwhile, the adhesive part 165 may be disposed on the second region of the reinforcement plate 170. The adhesive part 165 may attach or fix the reinforcement plate 170 to the circuit board 160. An area of the adhesive part 165 may correspond to an area of the circuit board 160.

Meanwhile, the circuit board 160 may include an insulating layer 161, a pad 162, and a protective layer 163.

The insulating layer includes a prepreg (PPG). The insulating layer 161 may be formed by impregnating a fiber layer in the form of a fabric sheet, such as a glass fabric woven with glass yarn, with an epoxy resin, and then performing thermocompression. However, the embodiment is not limited thereto, and the insulating layer 110 may include a fiber layer in the form of a fabric sheet woven with carbon fiber yarn. The insulating layer 161 may include a resin and a reinforcing member disposed in the resin. The resin may be an epoxy resin, but is not limited thereto. The resin is not particularly limited to the epoxy resin, and for example, one or more epoxy groups may be included in the molecule, or alternatively, two or more epoxy groups may be included, or alternatively, four or more epoxy groups may be included. In addition, the resin 110 may include a naphthalene group, for example, may be an aromatic amine type, but is not limited thereto. For example, the resin may be include a bisphenol A type epoxy resin, a bisphenol F type epoxy resin, a bisphenol S type epoxy resin, a phenol novolac type epoxy resin, an alkylphenol novolac type epoxy resin, a biphenyl type epoxy resin, an aralkyl type epoxy resin, dicyclopentadiene type epoxy resin, naphthalene type epoxy resin, naphthol type epoxy resin, epoxy resin of condensate of phenol and aromatic aldehyde having phenolic hydroxyl group, biphenyl aralkyl type epoxy resin, fluorene type epoxy resin resins, xanthene-type epoxy resins, triglycidyl isocyanurate, rubber-modified epoxy resins, phosphorous-based epoxy resins, and the like, and naphthalene-based epoxy resins, bisphenol A-type epoxy resins, and phenol novolac epoxy resins, cresol novolak epoxy resins, rubber-modified epoxy resins, and phosphorous-based epoxy resins. In addition, the reinforcing member may include glass fiber, carbon fiber, aramid fiber (eg, aramid-based organic material), nylon, silica-based inorganic material or titania-based inorganic material. The reinforcing member may be disposed in the resin to cross each other in a planar direction.

Meanwhile, the reinforcing member may use a glass fiber, a carbon fiber, aramid fiber (e.g., aramid-based organic material), a nylon, a silica-based inorganic material or a titania-based inorganic material.

A pattern part may be disposed on the insulating layer 161. For example, the pattern part may include a pad 162 electrically connected to the sensor 180 through a connection member W. In this case, although the drawing shows that only the pad electrically connected to the sensor 180 is disposed on the insulating layer 161, the embodiment is not limited thereto.

In addition, a protective layer 163 is disposed on the insulating layer 161. The protective layer 163 may be disposed on not only an upper surface of the insulating layer 161 but also an upper surface of the pattern part. The protective layer 163 may function to protect an upper surface of the insulating layer 161 and an upper surface of the pattern part.

The protective layer 163 may include an open region vertically overlapping an upper surface of the pad 162 electrically connected to the sensor 180 among the pattern parts. In addition, the pad 162 may be exposed through the open region of the protective layer 163. Accordingly, an embodiment may electrically connect the upper surface of the exposed pad 162 and the terminal 181 of the sensor 180 through the connection member W.

The protective layer 163 may be a solder resist, but is not limited thereto.

Meanwhile, in the embodiment, the pad 162 of the circuit board 160 and the terminal 181 of the sensor 180 are electrically connected through the connection member W.

An upper surface of the sensor 180 or an upper surface of the terminal 181 is positioned lower than an upper surface of the circuit board 160. In addition, an uppermost end of the connection member W is positioned higher than an upper surface of the circuit board 160. For example, an uppermost end of the connection member W is positioned higher than an upper surface of the protective layer 163.

Preferably, the connection member W may be positioned higher than the upper surface of the circuit board 160 by a predetermined protrusion height t1.

Accordingly, the base 150 of the embodiment provides a mounting portion for mounting the filter unit 140 while being spaced apart by a protrusion height (t1) of the connection member W. That is, the second portion 151b of the first frame 151 of the base 150 can protrude downward from the first portion 151a of the first frame 151. In addition, the embodiment can allow a certain distance to be spaced apart along the optical axis between an uppermost end of the connection member W and the second frame 152, or between the uppermost end of the connection member W and the filter unit 140 through the second portion 151b of the base 150. This will be described in more detail below.

Meanwhile, the embodiment can be screw-less connected to the lens barrel 120 and the bobbin 132 of the lens driving device 130. That is, the embodiment uses a screw-less connection method that can minimize the error range of optical axis alignment as a high-performance camera module is required to connect the lens barrel 120 and the bobbin 132.

The screw-less connection method can mean a method of fixing the lens barrel 120 to the bobbin 132 using an adhesive part 190 while inserting the lens barrel 120 into a hollow portion of the bobbin 132 from an upper or lower side.

That is, the adhesive part 190 may be disposed between an inner surface of the bobbin 132 and an outer surface of the lens barrel 120. The adhesive part 190 may firmly fix the lens barrel 120 to the bobbin 132. The adhesive part 190 may include a thermosetting epoxy or a UV epoxy. When the adhesive part 190 is implemented with a thermosetting epoxy, the adhesive part 190 may be cured in an oven, and unlike this, the adhesive part 190 may be cured by directly applying heat to the adhesive part 190. Also, when the adhesive part 190 is implemented with a UV epoxy, an embodiment may cure the adhesive part 190 by applying ultraviolet rays.

In addition, the adhesive part 190 may be implemented with an epoxy in which thermal curing and ultraviolet curing are mixed. For example, the adhesive part 190 may be an epoxy capable of both thermal curing and ultraviolet curing. Meanwhile, the adhesive part 190 of the embodiment is not limited to an epoxy, and any adhesive material capable of fixing the lens barrel 120 to the bobbin 132 may be replaceable.

Hereinafter, the filter module will be described in detail.

The filter module may include a base 150 and a filter unit 140 coupled to the base 150. For example, the filter module may mean a configuration in which the filter unit 140 is coupled to the base 150.

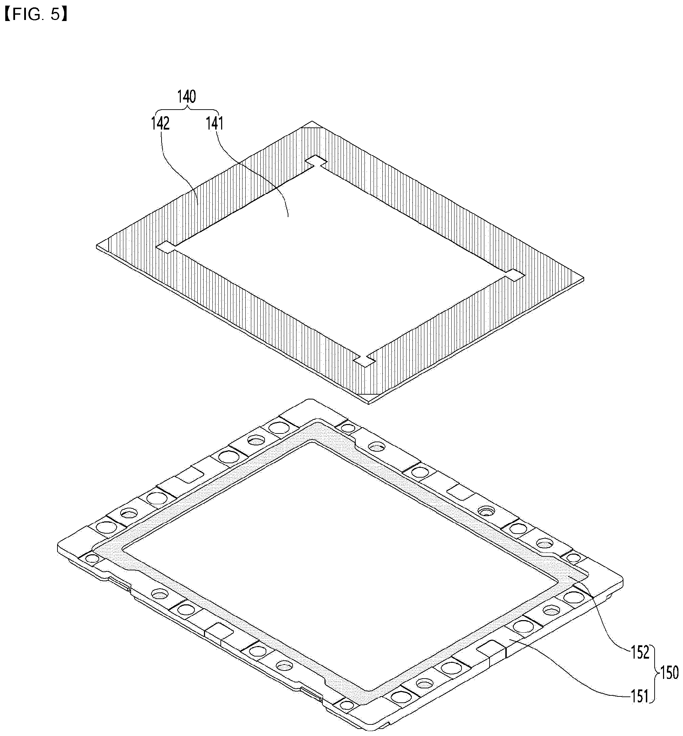

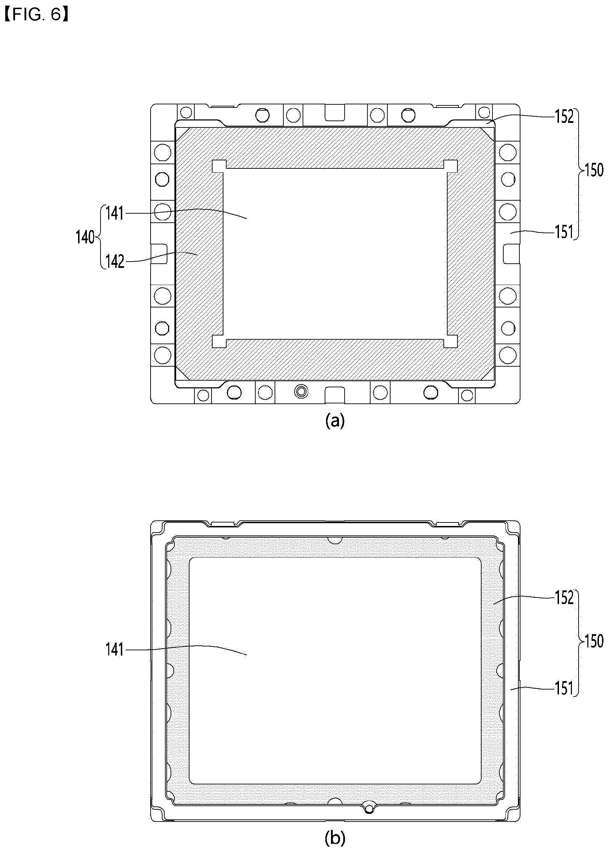

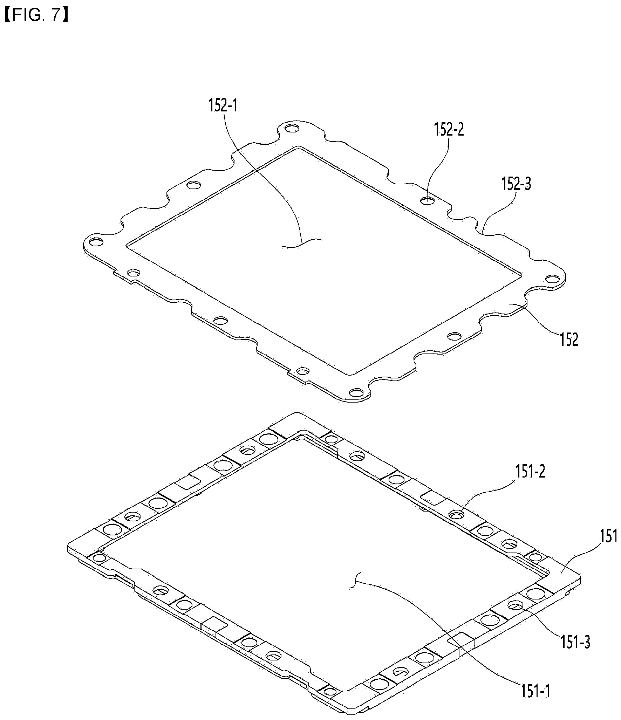

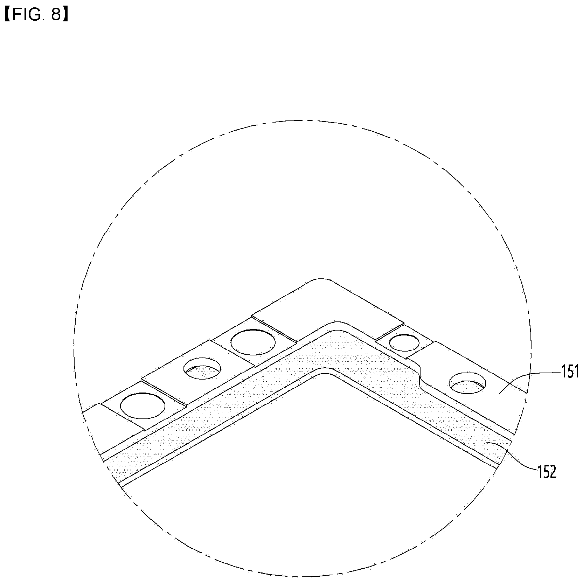

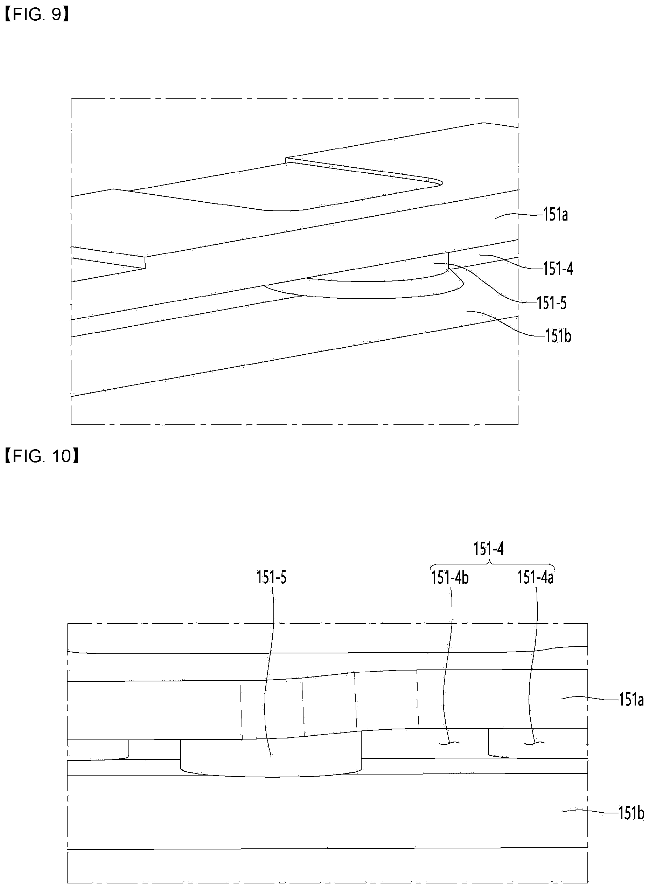

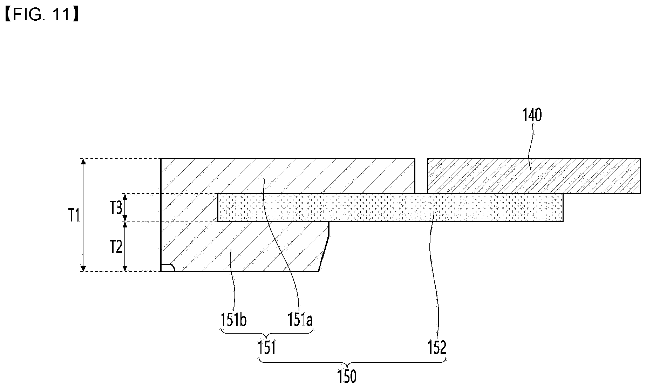

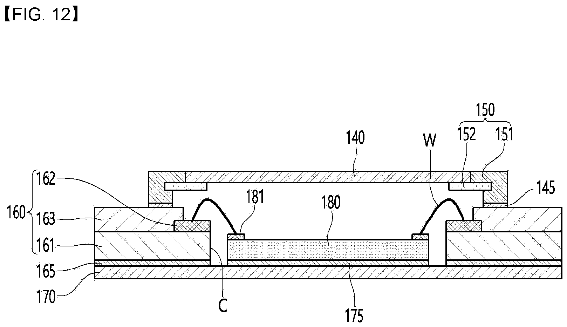

FIG. 5 is an exploded perspective view of a filter module according to an embodiment, FIG. 6 is a plan view of a filter module according to an embodiment, FIG. 7 is an exploded perspective view of a base according to an embodiment, FIG. 8 is an enlarged view of a partial region of a base according to an embodiment, FIG. 9 is a first enlarged view of a partial region of a first frame of a base according to an embodiment, FIG. 10 is a second enlarged view of a partial region of a first frame of a base according to an embodiment, FIG. 11 is a cross-sectional view of a filter module according to an embodiment taken along a line A-A', and FIG. 12 is a combination view of a filter module and a circuit board according to an embodiment. In addition, (a) of FIG. 6 is a plan view of the filter module viewed from above (e.g., where the lens is disposed), and (b) of FIG. 6 is a plan view of the filter module viewed from below (e.g., where the sensor is disposed).

Referring to FIGS. 5 to 12, the filter module includes a filter unit 140 and a base 150 on which the filter unit 140 is mounted.

The filter unit 140 includes a filter 141 and a blocking member 142 disposed on one surface of the filter 141.

The filter 141 may include an upper surface facing the lens 110 and a lower surface facing the sensor 180.

In addition, the blocking member 142 may be disposed on an upper surface of the filter 141. The blocking member 142 may be partially disposed on the upper surface of the filter 141. Preferably, the blocking member 142 may be selectively disposed in an edge region of the upper surface of the filter 141. For example, the blocking member 142 may include an opening (not shown) that opens a center region of the upper surface of the filter 141. For example, the blocking member 142 may open a region of the upper surface of the filter 141 overlapping the sensor 180 in an optical axis. The blocking member 142 may be attached to or coupled to the upper surface of the filter 141. The blocking member 142 may be formed by applying an opaque material to the upper surface of the filter 141. The blocking member 142 may be formed by attaching an opaque film to the upper surface of the filter 141.

A base 150 is disposed bellow the filter unit 140. The base 150 includes a mounting portion on which the filter unit 140 is disposed or mounted.

Before explaining the embodiment of the present invention, a comparative example (prior art) will be explained as follows. The base in the comparative example is an injection-molded product manufactured using resin. That is, the base in the comparative example includes only an insulating material such as resin.

The base of the comparative example is an injection product manufactured using a resin. That is, the base of the prior art includes only an insulating material such as a resin. In this case, the base of the comparative example includes a mounting portion such as a window in which the filter unit is mounted, a first protrusion protruding downward from a lower surface of the mounting portion, and a second protrusion protruding upward from an upper surface of the mounting portion. The first protrusion of the base of the prior art separates the mounting portion of the base from the circuit board at a predetermined interval. For example, a connection member (wire) electrically connecting the sensor and the circuit board protrudes from the upper surface of the circuit board by a predetermined protrusion height (t1) toward the lens 110. Accordingly, the first protrusion is formed to have a predetermined thickness so that the filter unit mounted on the mounting portion does not contact the connection member. In this case, the protrusion height (t1) exceeds 150 µm. For example, the protrusion height (t1) exceeds 170 µm. Accordingly, a thickness of the first protrusion of the base of the comparative example exceeds 150 µm. For example, the thickness of the first protrusion of the base of the comparative example exceeds 170 µm.

Meanwhile, the mounting portion of the base of the comparative example has a predetermined thickness. In this case, the thickness of the mounting portion may be determined by the size of the filter. The thickness of the mounting portion of the comparative example is about 180 µm. In recent years, the size of a sensor is increasing, and accordingly, a size of a filter is also increasing. In addition, when the thickness of the mounting portion above must be 180 µm or more, a large-sized filter can be stably mounted. For example, when the thickness of the mounting portion above must be 180 µm or more, the flatness of the filter can be maintained (or warpage properties are improved). This is because the base of the comparative example is an injection product of an insulating material, and accordingly, the mounting portion is also an injection product formed of an insulating material. In addition, if the thickness of the mounting portion of the comparative example is less than 180 µm, injection defects such as unmolding of the mounting portion may occur in a process of manufacturing the base by injection. In addition, if the thickness of the mounting portion of the comparative example is less than 180 µm, injection defects in which burrs occur during injection may occur in a process of manufacturing the base by injection. Accordingly, the mounting portion of the comparative example has a thickness of at least 180 µm.

Meanwhile, the second protrusion of the base of the comparative example has a predetermined thickness. The thickness of the second protrusion is determined by the injection property of the base manufactured by injection. For example, if a total thickness of the base including the second protrusion becomes thin, extractability may deteriorate in a process of extracting the injection product from an injection mold. For example, if a total thickness of the base including the second protrusion becomes thin, deformation may occur in a process of extracting the injection product from the injection mold. Accordingly, the total thickness of the base of the comparative example is 720 µm. For example, if the total thickness of the base is less than 720 µm, injection defects such as decrease in extractability and deformation may occur. Accordingly, a thickness of the second protrusion is 390um.

As described above, in the comparative example, the base is manufactured using only an insulating material such as a resin. Accordingly, there is a limit to reducing the total thickness of the base and the thickness of the window because injection defects must be considered in the comparative example. Furthermore, by using the base injected with the insulating material, it may not be possible to stably mount the filter unit that is becoming larger. For example, in the comparative example, there is a limit to increasing a width of the base in response to the increase in a size of the sensor and filter unit.

Meanwhile, in the comparative example, the FBL corresponding to an optical axis distance between the sensor and the lens is increasing due to a thickness of each portion of the base as described above. For example, in the comparative example, the FBL (Flange Back Length) has a minimum level of 1.1 due to limits of a minimum thickness of each of the first protrusion, the mounting portion, and the second protrusion.

In this case, since the thickness of the first protrusion in the prior art is determined by the protrusion height (t1) of the connection member, it may be difficult to reduce it. However, a thickness of the mounting portion and a thickness of the second protrusion (e.g., a total thickness of the base) may be reduced under conditions of improving injection defects or improving warpage characteristics of the filter.

Accordingly, the embodiment, unlike the comparative example, reduces a thickness of the mounting portion, a thickness of the second protrusion, and further an overall thickness of the base by changing a material constituting the base 150. Through this, the embodiment reduces the FBL (Flange Back Length) compared to the comparative example.

To this end, as briefly described above, the base 150 is formed of a plurality of materials.

Specifically, the base 150 includes a first frame 151 and a second frame 152. The first frame 151 may be formed of a same material as the base of the comparative example. For example, the first frame 151 may be formed of an insulating material.

The second frame 152 includes a different material from the first frame 151 or the base of the comparative example. Preferably, the second frame 152 includes a metal material. The second frame 152 secures the rigidity of the base 150 while maintaining the flatness of the filter unit 140 mounted on the base 150. To this end, the second frame 152 may be formed of a metal material having a certain rigidity.

At this time, the first frame 151 and the second frame 152 may not be manufactured separately through separate processes and then combined, but may be manufactured as a single unit through double injection or insert injection.

To briefly explain a manufacturing method, in the embodiment, the second frame 152 is disposed in an injection mold. In the embodiment, an insulating material is injected into the upper and lower portions of the second frame 152 in state in which the second frame 152 is disposed, thereby forming the first frame 151 that covers the second frame 152. Accordingly, the second frame 152 can be inserted into the first frame 151.

At this time, the second frame 152 can perform a function of the mounting portion of the base of the comparative example. That is, in the embodiment, the mounting portion on which the filter unit 140 is fixed is formed of a metal material. Accordingly, the embodiment can reduce a thickness of the mounting portion compared to the comparative example. For example, a thickness of the second frame 152 in the embodiment can be smaller than a thickness of the mounting portion of the comparative example. In addition, the embodiment can respond to an increase in a size of the filter by applying the second frame 152.

Structures of the first frame 151 and the second frame 152 will be described in detail as follows. Hereinafter, the structures of each frame will be described in a state where the second frame 152 is separated from the first frame 151.

The first frame 151 is formed of an insulating material. The first frame 151 may have a planar shape corresponding to a shape of the filter unit 140. For example, the planar shape of the first frame 151 may have a square ring shape, but is not limited thereto. For example, the first frame 151 may have a circular ring shape corresponding to a shape of the lens 110.

The first frame 151 may be divided into a plurality of parts in the optical axis direction. For example, the first frame 151 may divide a first portion 151a and a second portion 151b in the optical axis direction.

The first portion 151a may refer to a portion of the first frame 151 positioned adjacent to the lens 110. In addition, the second portion 151b may refer to a portion of the first frame 151 positioned adjacent to the sensor 180. For example, the first portion 151a may be referred to as a first-first frame covering an upper portion of the second frame 152. For example, the second portion 151b may be referred to as a first-second frame covering a lower portion of the second frame 152. In addition, the second portion 151b may be referred to as a protrusion protruding downward from the first portion 151a. In addition, the second portion 151b may be referred to as a separation portion that spacers the second frame 152 upward from the circuit board 160 in correspondence with the protrusion height (t1) of the connection member W.

In addition, the second portion 151b may be referred to as an receiving portion or pocket portion in which the protrusion portion of the connection member W is accommodated. Accordingly, a thickness of the second portion 151b may correspond to the protrusion height (t1) of the connection member W. For example, the thickness (T2) of the second portion 151b may satisfy a range of 150 µm to 250 µm. If the thickness (T2) of the second portion 151b is less than 150 µm, a physical or electrical reliability problem may occur in an operating environment of the camera module. For example, if the thickness (T2) of the second portion 151b is less than 150 µm, a problem may occur in which the filter unit 140 disposed on the second frame 152 comes into contact with the connection member W. In addition, if the filter unit 140 comes into contact with the connection member W, an electrical short circuit may occur between the sensor 180 and the circuit board 160. In addition, if the thickness (T2) of the second portion 151b exceeds 250 µm, the overall thickness (T1) of the base 150 may increase by the thickness of the second portion 151b. In addition, if the overall thickness (T1) of the base 150 increases, the FBL (Flange Back Length) of the camera module according to the embodiment may increase.

The first portion 151a of the first frame 151 is positioned on the second portion 151b. The first portion 151a of the first frame 151 may protect the filter unit 140 mounted on the second frame 152. For example, the first portion 151a of the first frame 151 may protrude from an upper surface of the second frame 152 with a certain height. The first portion 151a of the first frame 151 may be disposed to surround a periphery of the filter unit 140 mounted on the second frame 152. For example, the first portion 151a of the first frame 151 may be disposed to surround a side surface of the second frame 152 at a position spaced apart from the side surface of the second frame 152 by a predetermined distance.

Meanwhile, the second portion 151b may be formed with a predetermined width on a lower surface of the first portion 151a. For example, the width of the second portion 151b may have a range of 350 um to 700 um. If the width of the second portion 151b is less than 350 um, the rigidity of the base 150 may be deteriorated. If the width of the second portion 151b is less than 350 um, the injection performance may be deteriorated. For example, if the width of the second portion 151b is less than 350 um, an open region may exist in at least a portion of the second portion 151b in which an insulating material is not filled during the injection process. If the width of the second portion 151b exceeds 700 µm, an area of the base 150 may increase by the width of the second portion 151b. Accordingly, a volume of the camera module may increase. Accordingly, the embodiment sets the width of the second portion 151b to be 350 µm to 700 µm.

Meanwhile, the first frame 151 may include a first opening 151-1. The first opening 151-1 of the first frame 151 may overlap the filter unit 140 along the optical axis. At this time, the first opening 151-1 of the first frame 151 may have an area larger than the area of the filter unit 140. For example, the first opening 151-1 of the first frame 151 may include a first region that overlaps the filter unit 140 along the optical axis. For example, the first opening 151-1 of the first frame 151 may include a second region that overlaps the second frame 152 along the optical axis without overlapping the filter unit 140 along the optical axis.

The first frame 151 may include an receiving portion 151-4. The receiving portion 151-4 may be formed from an inner surface of the first opening 151-1 of the first frame 151 toward the outside. The receiving portion 151-4 may be formed between the first portion 151a and the second portion 151b of the first frame 151. The receiving portion 151-4 can be said to be an insertion groove or insertion hole into which the second frame 152 is inserted.

The receiving portion 151-4 may be divided into a plurality of parts. For example, the receiving portion 151-4 may include a recess portion 151-4a in a groove shape that is recessed in an outward direction from the inner surface of the first frame 151. In addition, at least a part of the second frame 152 may be inserted into the recess portion 151-4a of the receiving portion 151-4 of the first frame 151.

In addition, the receiving portion 151-4 may include a hole portion 151-4b connected to the recess portion 151-4a. The hole portion 151-4b may have a hole shape that penetrates inner and outer surfaces of the first frame 151. At least a part of the second frame 152 is disposed in the hole portion 151-4b of the receiving portion 151-4. Accordingly, at least a part of the second frame 152 may be exposed toward the outer surface of the first frame 151. The hole portion 151-4b may be formed in a process of manufacturing a base 150 including the first frame 151 and the second frame 152 through double injection or insert injection. For example, the embodiment may manufacture a plurality of bases simultaneously. For example, the embodiment may perform a process of injecting an insulating material to inject the first frame in a state where a plurality of second frames connected to each other are prepared. In addition, the hole portion 151-4b may be a part where second frames of different bases are connected to each other in the injection process. In addition, the hole portion 151-4b may be a hole for separating (for example, cutting) the second frames of different bases from each other after the injection process is completed.

The first frame 151 includes a partition wall part 151-5. The partition wall part 151-5 may be formed in the receiving portion 151-4 of the first frame 151. For example, the partition wall part 151-5 may be disposed between the upper and lower surfaces of the receiving portion 151-4 of the first frame 151. The partition wall part 151-5 may divide the receiving portion 151-4 of the first frame 151 into a plurality of regions. The partition wall part 151-5 may have a function of improving the rigidity of the first frame 151. In addition, the partition wall part 151-5 can improve a bonding strength of the first frame 151 and the second frame 152. For example, at least a part of the partition wall part 151-5 can penetrate the second frame 152. In addition, at least a part of the second frame 152 can be bonded to the partition wall part 151-5. Accordingly, the bonding strength can be increased by injection molding the first frame 151 and the second frame 152.

The first frame 151 can include a through hole 151-2. The through hole 151-2 can penetrate the upper and lower surfaces of the first frame 151. For example, the through hole 151-2 can penetrate the first portion 151a and the second portion 151b of the first frame 151. For example, the through hole 151-2 may be connected to the receiving portion 151-4 of the first frame 151. The through hole 151-2 may be an air vent hole for improving reliability in an injection process or a bonding process. For example, the through hole 151-2 may remove gas in an injection process for manufacturing a base 150 including the first frame 151 and the second frame 152. Accordingly, the embodiment may improve the injectability and extractability of the base 150. In addition, the through hole 151-2 may remove gas in a process of bonding or fixing the base 150 to the circuit board 160. Accordingly, the embodiment may improve the bonding strength between the circuit board 160 and the base 150.

The first frame 151 may include a recess 151-3. The recess 151-3 may be formed in the first portion 151a of the first frame 151. For example, the recess 151-3 may also be referred to as a through hole penetrating the first portion 151a of the first frame 151. The recess 151-3 is formed in the first portion 151a of the first frame 151, and is not formed in the second portion 151b. The recess 151-3 may be an injection hole for injecting an insulating material in the insert injection or double injection process. In addition, the recess 151-3 may also function as a gas passage hole for removing gas in the insert injection or double injection process. In addition, the recess 151-3 may be communicated with the receiving portion 151-4. Accordingly, at least a part of the second frame 152 inserted into the receiving portion 151-4 may be exposed to an upper side of the base 150 through the recess 151-3.

The second frame 152 is accommodated in the receiving portion 151-4 of the first frame 151. For example, the second frame 152 may be double-injected or insert-injected to be accommodated in the receiving portion 151-4 of the first frame 151.

The second frame 152 may have a shape corresponding to the first frame 151. For example, a planar shape of the second frame 152 may correspond to the planar shape of the first frame 151. For example, the planar shape of the second frame 152 may be a square shape. However, the embodiment is not limited thereto, and the planar shape of the second frame 152 may have a circular shape, etc.

The second frame 152 may include a second opening 152-1. The second opening 152-1 may overlap the first opening 151-1 of the first frame 151 along an optical axis. The second opening 152-1 may overlap the lens 110 along an optical axis. The second opening 152-1 may overlap the sensor 180 along an optical axis. The second opening 151-1 may overlap the filter unit 140 along an optical axis.

At this time, an area of the second opening 152-1 of the second frame 152 may be smaller than the area of the first opening 151-1 of the first frame 151. In addition, the area of the second opening 152-1 of the second frame 152 may be smaller than an area of the filter unit 140. Accordingly, a part of the filter unit 140 may overlap the second opening 152-1 of the second frame 152 along the optical axis. In addition, a remaining part of the filter unit 140 may overlap the second frame 152 along the optical axis. That is, at least a part of the filter 141 of the filter unit 140 may overlap the second opening 152-1 of the second frame 152 along the optical axis while being mounted on the upper surface of the second frame 152.

The second frame 152 may include a plurality of through holes.

For example, the second frame 152 may include a first through hole 152-2 and a second through hole 152-3.

The first through hole 152-2 and the second through hole 152-3 of the second frame 152 may penetrate upper and lower surfaces of the second frame 152.

At this time, the first through hole 152-2 and the second through hole 152-3 may have different shapes or opening areas.

For example, the first through hole 152-2 may not be connected to the outer surface of the second frame 152. Accordingly, the first through hole 152-2 may penetrate the second frame 152 at a position spaced apart from the outer surface of the second frame 152 by a certain distance.

The second through hole 152-3 may be connected to the outer surface of the second frame 152. For example, the second through hole 152-3 may also be referred to as a recess portion that is recessed inwardly from the outer surface of the second frame 152.

One of the first through hole 152-2 and the second through hole 152-3 may overlap with the through hole 151-2 of the first frame 151 along the optical axis. Accordingly, at least one of the first through hole 152-2 and the second through hole 152-3 of the second frame 152 may function as an air passage hole through which air passes.

In addition, the other one of the first through hole 152-2 and the second through hole 152-3 may be a hole through which the partition wall part 151-5 of the first frame 151 passes. For example, the partition wall part 151-5 of the first frame 151 may pass through either the first through hole 152-2 or the second through hole 152-3 of the second frame 152.

Meanwhile, the embodiment is not limited thereto, and at least one of the first through holes 152-2 may overlap with the through hole 151-2 of the first frame 151 along an optical axis, and at least another one of the first through holes 152-2 may overlap with the partition wall part 151-5 along an optical axis. Correspondingly, at least one of the second through holes 152-3 may overlap with the through hole 151-2 of the first frame 151 along the optical axis, and at least another one of the second through holes 152-3 may overlap with the partition wall part 151-5 along the optical axis.

The second frame 152 may have a certain thickness (T3). For example, the second frame 152 may have a thickness that can stably mount the filter unit 140 while maintaining the flatness of the filter unit 140.

At this time, the mounting portion of the comparative example was formed by an injection molding of an insulating material. Accordingly, the thickness of the mounting portion of the comparative example exceeds 180 µm.

Unlike this, the embodiment uses double injection or insert injection so that the mounting portion on which the filter unit 140 is mounted is formed of a metal material. Accordingly, the embodiment can reduce the thickness of the second frame 152 corresponding to the mounting portion compared to the comparative example. For example, a thickness (T3) of the second frame 152 in the embodiment can be 160 um or less. For example, the thickness (T3) of the second frame 152 in the embodiment can be 150 um or less. For example, the thickness (T3) of the second frame 152 in the embodiment can be 140 um or less. For example, the thickness (T3) of the second frame 152 in the embodiment can be 130 um or less. For example, the thickness (T3) of the second frame 152 in the embodiment can be 120 um or less. For example, the thickness (T3) of the second frame 152 in the embodiment can be 110 um or less.

Preferably, the thickness (T3) of the second frame 152 in the embodiment can satisfy a range of 95 um to 160 um. For example, the thickness (T3) of the second frame 152 in the embodiment can satisfy a range of 98 um to 155 um. For example, the thickness (T3) of the second frame 152 in the embodiment can satisfy a range of 100 um to 150 um.

If the thickness (T3) of the second frame 152 is less than 95 um, the rigidity of the base 150 may be deteriorated. In addition, if the thickness (T3) of the second frame 152 is less than 95 um, the injectability or extractability in the injection process may be deteriorated due to a decrease in the overall thickness (T1) of the first frame 151. In addition, if the thickness (T3) of the second frame 152 is less than 95 µm, the flatness of the filter unit 140 mounted on the second frame 152 may be reduced.

In addition, if the thickness (T3) of the second frame 152 exceeds 160 µm, the FBL (Flange Back Length) may increase in response to the increase in the thickness of the second frame 152.

Meanwhile, the embodiment may reduce the overall thickness (T1) of the base 150 compared to the comparative example by injecting the base 150 to have a structure including the second frame 152.

For example, the embodiment may reduce a thickness of the first portion 151a of the first frame 151 corresponding to the second protrusion of the comparative example. That is, in the embodiment, as the injection process is performed with the second frame 152 inserted, even if the thickness of the first frame 151 is reduced compared to the comparative example, there is no problem with the injectability or the extractability. Accordingly, the embodiment can reduce the thickness of the first frame 151, specifically the thickness of the first portion 151a of the first frame 151.

Accordingly, a total thickness (T1) of the base 150 in the embodiment can have a range of 350 um to 550 um. That is, the total thickness of the base in the comparative example was about 720 um. In addition, the embodiment can reduce the total thickness (T1) of the base 150 to 48% to 76% of the thickness of the base in the comparative example. Accordingly, the embodiment can lower the FBL (Flange Back Length). Furthermore, the embodiment can reduce the total thickness or volume of the camera module.

Specifically, when applying the base 150 including the first frame 151 and the second frame 152 in the embodiment, the FBL (Flange Back Length) can be lowered to a level of 0.95.

Meanwhile, the second frame 152 may include a coating layer (not shown). For example, the second frame 152 is formed of a metal material. In addition, at least a part of the second frame 152 may not overlap the blocking member 142 of the filter unit 140 in the optical axis. As a result, a problem may occur in which light passing through the lens 110 and the filter unit 140 is reflected at the second frame 152. In addition, when the light is reflected by the second frame 152, a flare phenomenon may occur. Accordingly, the second frame 152 includes a coating layer to prevent reflection of the light. For example, the second frame 152 may include a blackened coating layer, but is not limited thereto. For example, the material applied to the coating layer of the second frame 152 may include any material having a property of suppressing reflection of light.

Meanwhile, the second frame 152 includes a metal material, and thus may affect the operation of the lens driving device of the embodiment. For example, the second frame 152 may cause magnetic interference. For example, the second frame 152 may cause interference in the interaction of the coil or magnet of the lens driving device.

Accordingly, the second frame 152 in the embodiment may be formed of a non-magnetic metal material. However, the embodiment is not limited thereto, and the second frame 152 may be formed of a metal material having a magnetism of a value that does not cause the magnetic interference.

The camera module of the embodiment includes a base on which the filter unit is mounted. At this time, the base includes a plurality of frames made of different materials. For example, the base includes a first frame made of a first material and a second frame made of a second material. At this time, the first material includes an insulating material. In addition, the second material includes a metal material different from the first material. The second frame functions as a mounting portion on which the filter unit is mounted on the base. Accordingly, the embodiment can stably mount the filter unit on the base by making the mounting portion on which the filter unit is mounted made of a metal material. In addition, the embodiment can improve a flatness of the filter unit mounted on the base.

Meanwhile, a size of the sensor is increasing due to a demand for high resolution, and a size of the filter unit is also increasing accordingly. At this time, there is a limit to a size of the filter unit that can be mounted on the mounting part that is injected with an insulating material of a comparative example. Unlike this, the embodiment has a second frame corresponding to the mounting portion formed of a metal material. Accordingly, the embodiment can provide a base capable of responding to an increase in a size of the filter unit. Furthermore, the embodiment can increase a size of the filter unit that can be mounted while maintaining a flatness of the filter unit compared to the comparative example.

In addition, the embodiment can reduce a thickness of the second frame compared to the comparative example. Specifically, since the comparative example must consider the issue of non-molding in an injection process, the mounting portion must have a certain thickness or more. Unlike this, the embodiment does not have to consider the issue of non-molding of the second frame corresponding to the mounting portion. Accordingly, the embodiment can reduce a thickness of the second frame corresponding to the mounting portion compared to the comparative example. That is, the embodiment can reduce a thickness of the second frame under a condition of maintaining the flatness of the filter unit. Accordingly, the embodiment can reduce a FBL (Flange Back Length) to correspond to a decrease in the thickness of the second frame. Accordingly, the embodiment can reduce an overall thickness or volume of the camera module.

In addition, the embodiment allows the injection of the first frame in a state in which the second frame is inserted. Accordingly, the embodiment can reduce a thickness of the first frame and an overall thickness of the base corresponding thereto. For example, the comparative example require consideration of injectability and extractability issues. Accordingly, the comparative example has a limit to a reduction of an overall thickness of the base. Alternatively, the embodiment performs the injection in a state in which the second frame is inserted. Accordingly, the embodiment can reduce a thickness of the first frame and the overall thickness of the base corresponding to the thickness of the first frame compared to the comparative example. Accordingly, the embodiment can reduce a FBL (Flange Back Length). In addition, the embodiment can reduce the overall thickness or volume of the camera module.

Meanwhile, the second frame in the embodiment includes a blackened coating layer. The coating layer prevents light passing through the lens and filter from being reflected through the second frame. Accordingly, the embodiment can improve an image quality of the camera module.

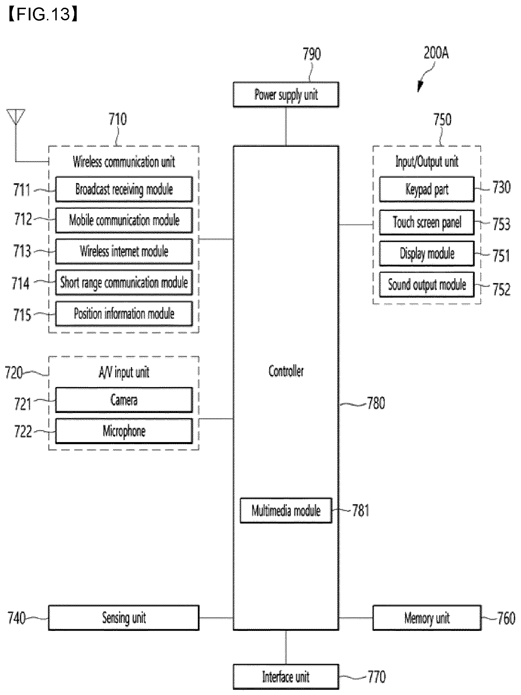

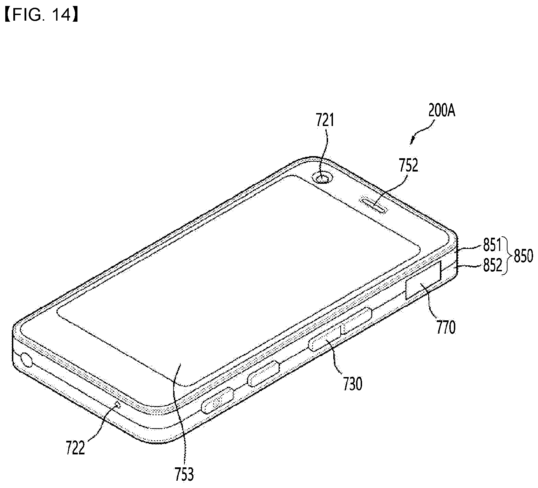

FIG. 13 is a perspective view of a portable terminal 200A according to an embodiment, and FIG. 14 is a configuration diagram of a portable terminal shown in FIG. 13.

Referring to FIGS. 13 and 14, a portable terminal (200A, hereinafter referred to as a "terminal") may include a body 850, a wireless communication unit 710, an A/V input unit 720, a sensing unit 740, an input/output unit 750, a memory unit 760, an interface unit 770, a control unit 780, and a power supply unit 790.

The body 850 shown in FIG. 13 is in the form of a bar, but is not limited thereto, and there may be various structures such as a slide type, a folder type, a swing type, a swivel type, in which two or more sub-bodies are coupled to be movable relative to each other.

The body 850 may include a case (casing, housing, cover, etc.) forming an exterior. For example, the body 850 may be divided into a front case 851 and a rear case 852. Various electronic components of the terminal may be embedded in a space formed between the front case 851 and the rear case 852.

The wireless communication unit 710 may include one or more modules that enable wireless communication between the terminal 200A and the wireless communication system or between the terminal 200A and the network in which the terminal 200A is located. For example, the wireless communication unit 710 may include a broadcast reception module 711, a mobile communication module 712, a wireless internet module 713, a short-range communication module 714, and a location information module 715.

The A/V (Audio/Video) input unit 720 is for inputting an audio signal or a video signal, and may include a camera 721 and a microphone 722 and the like.

The camera 721 may include a camera module according to the embodiment shown in FIG. 1.

The sensing unit may detect a current state of the terminal 200A, such as an opening/closing state of the terminal 200A, a position of the terminal 200A, a presence or absence of user contact, an orientation of the terminal 200A, acceleration/deceleration of the terminal 200A, etc. In addition, generate a sensing signal for controlling the operation of the terminal 200A. For example, when the terminal 200A is in the form of a slide phone, it is possible to sense whether the slide phone is opened or closed. In addition, it is responsible for sensing functions related to whether the power supply unit 790 is supplied with power, whether the interface unit 770 is coupled to an external device, and the like.

The input/output unit 750 is for generating input or output related to sight, hearing, or touch. The input/output unit 750 may generate input data for operation control of the terminal 200A, and may also display information processed by the terminal 200A.

The input/output unit 750 may include a keypad unit 730, a display module 751, a sound output module 752, and a touch screen panel 753. The keypad unit 730 may generate input data in response to a keypad input.

The display module 751 may include a plurality of pixels whose color changes according to an electrical signal. For example, the display module 751 may include at least of a liquid crystal display, a thin film transistor-liquid crystal display, an organic light-emitting diode, a flexible display, three-dimensional display (3D display).

The sound output module 752 may output audio data received from the wireless communication unit 710 in a call signal reception, a call mode, a recording mode, a voice recognition mode, or a broadcast reception mode, or the like; or audio data stored in the memory unit 760.

The touch screen panel 753 may convert a change in capacitance generated due to a user's touch on a specific region of the touch screen into an electrical input signal.

The memory unit 760 may store a program for processing and control of the controller 780, and may temporarily store input/output data (e.g., phone book, message, audio, still image, photo, video, etc.). For example, the memory unit 760 may store an image captured by the camera 721, for example, a photo or a moving picture.

The interface unit 770 serves as a passage for connecting with an external device connected to the terminal 200A. The interface unit 770 receives data from an external device, receives power and transmits it to each component inside the terminal 200A, or transmits data of the terminal 200A to an external device. For example, the interface unit 770 may include a wired/wireless headset port, an external charger port, a wired/wireless data port, a memory card port, a port for connecting a device having an identification module, and an audio I/O (Input/Output) port, video I/O (Input/Output) port, and an earphone port, and the like.

The controller (controller, 780) may control the overall operation of the terminal 200A. For example, the controller 780 may perform related control and processing for voice calls, data communications, video calls, and the like.

The controller 780 may include a multimedia module 781 for playing multimedia. The multimedia module 781 may be implemented within the controller 180 or may be implemented separately from the controller 780.

The controller 780 may perform a pattern recognition process capable of recognizing a handwriting input or a drawing input performed on the touch screen as characters and images, respectively.

The power supply unit 790 may receive external power or internal power under the control of the control unit 780 to supply power required for the operation of each component.

The camera module of the embodiment includes a base on which the filter unit is mounted. At this time, the base includes a plurality of frames made of different materials. For example, the base includes a first frame made of a first material and a second frame made of a second material. At this time, the first material includes an insulating material. In addition, the second material includes a metal material different from the first material. The second frame functions as a mounting portion on which the filter unit is mounted on the base. Accordingly, the embodiment can stably mount the filter unit on the base by making the mounting portion on which the filter unit is mounted made of a metal material. In addition, the embodiment can improve a flatness of the filter unit mounted on the base.

Meanwhile, a size of the sensor is increasing due to a demand for high resolution, and a size of the filter unit is also increasing accordingly. At this time, there is a limit to a size of the filter unit that can be mounted on the mounting part that is injected with an insulating material of a comparative example. Unlike this, the embodiment has a second frame corresponding to the mounting portion formed of a metal material. Accordingly, the embodiment can provide a base capable of responding to an increase in a size of the filter unit. Furthermore, the embodiment can increase a size of the filter unit that can be mounted while maintaining a flatness of the filter unit compared to the comparative example.

In addition, the embodiment can reduce a thickness of the second frame compared to the comparative example. Specifically, since the comparative example must consider the issue of non-molding in an injection process, the mounting portion must have a certain thickness or more. Unlike this, the embodiment does not have to consider the issue of non-molding of the second frame corresponding to the mounting portion. Accordingly, the embodiment can reduce a thickness of the second frame corresponding to the mounting portion compared to the comparative example. That is, the embodiment can reduce a thickness of the second frame under a condition of maintaining the flatness of the filter unit. Accordingly, the embodiment can reduce a FBL (Flange Back Length) to correspond to a decrease in the thickness of the second frame. Accordingly, the embodiment can reduce an overall thickness or volume of the camera module.

In addition, the embodiment allows the injection of the first frame in a state in which the second frame is inserted. Accordingly, the embodiment can reduce a thickness of the first frame and an overall thickness of the base corresponding thereto. For example, the comparative example require consideration of injectability and extractability issues. Accordingly, the comparative example has a limit to a reduction of an overall thickness of the base. Alternatively, the embodiment performs the injection in a state in which the second frame is inserted. Accordingly, the embodiment can reduce a thickness of the first frame and the overall thickness of the base corresponding to the thickness of the first frame compared to the comparative example. Accordingly, the embodiment can reduce a FBL (Flange Back Length). In addition, the embodiment can reduce the overall thickness or volume of the camera module.

Meanwhile, the second frame in the embodiment includes a blackened coating layer. The coating layer prevents light passing through the lens and filter from being reflected through the second frame. Accordingly, the embodiment can improve an image quality of the camera module.

In addition, the second frame in the embodiment is formed of a non-magnetic material. Accordingly, the embodiment can solve a problem that operating characteristics of a sensor driving device are deteriorated by the second frame. For example, when the second frame is composed of a magnetic material, magnetic interference may occur in an interaction between the coil and the magnet of the sensor driving device. In addition, the operating characteristics of the sensor driving device may be deteriorated by the magnetic interference. Unlike this, the second frame in the embodiment includes a non-magnetic material. Accordingly, the embodiment can achieve an effect of maintaining the flatness of the filter unit and reducing the FBL without affecting the operating characteristics of the sensor driving device.

Although the embodiments of the present invention have been described with reference to the accompanying drawings, those skilled in the art to which the present invention pertains will be understood that the present invention may be implemented in other specific forms without modifying the technical spirit and essential features of the present invention. Therefore, it should be understood that the embodiments described above are illustrative in all aspects and not restrictive.

## Claims

1. A camera module comprising:
a base; and
a filter unit disposed on the base;
wherein the base includes:
a first frame including an insulating material; and
a second frame inserted into the first frame and including a metal material,
wherein the filter unit is disposed on the second frame of the base.

2. The camera module of claim 1, wherein the second frame is coupled to the first frame by an insert injection method.

3. The camera module of claim 1, wherein the first frame includes a first opening, and
wherein the second frame includes a second opening overlapping the first opening along an optical axis, and is inserted into an inner surface of the first opening of the first frame.

4. The camera module of claim 3, wherein an area of the second opening is smaller than an area of the first opening and an area of the filter unit.

5. The camera module of claim 3, wherein the first frame includes an receiving portion into which the second frame is inserted,
wherein the receiving portion includes:
a recess portion formed in an outer direction from an inner surface of the first frame; and
a hole portion penetrating the inner surface and an outer surface of the first frame.

6. The camera module of claim 5, wherein the first frame includes a partition wall part dividing the receiving portion into a plurality of regions, and
wherein the partition wall part penetrating the second frame inserted into the receiving portion.

7. The camera module of any one of claims 1 to 6, further comprising:
a reinforcement plate;
a circuit board disposed on the reinforcement plate and including a cavity;
a sensor disposed on an upper surface of the reinforcement plate vertically overlapping the cavity of the circuit board and disposed in the cavity of the circuit board; and
a connection member connecting between a terminal of the sensor and a pad of the circuit board, and
wherein an uppermost end of the connection member is positioned higher than an upper surface of the circuit board.

8. The camera module of claim 7, wherein the first frame includes a first portion positioned above the second frame based on a position where the second frame is inserted, and a second portion positioned below the second frame based on the position, and
wherein the second frame is spaced apart from the uppermost end of the connection member in an optical axis direction by the second portion of the first frame.

9. The camera module of claim 8, wherein a thickness of the second portion of the first frame satisfies a range of 150um to 250um.

10. The camera module of any one of claims 1 to 6, wherein the base includes a through hole penetrating the first frame and the second frame.
